# EUROPÄISCHE PATENTANMELDUNG

(11) **EP 1 729 052 A1**
(43) Veröffentlichungstag der Anmeldung: **06.12.2006**
(21) Anmeldenummer: 06004298.3
(22) Anmeldetag: 16.08.2002
(51) Int. Cl.: F16L 39/04

(54) **Vorrichtung zur Verteilung von Flüssigkeiten**

(30) Priorität: 01.09.2001 DE 10142988
(62) Teilanmeldung aus: 02018444.6
(71) Anmelder: Christian Maier GmbH & Co. KG Maschinenfabrik, 89520 Heidenheim (DE)
(72) Erfinder: Szam, Peter, 89547 Gerstetten (DE); Frey, Christof, 89564 Nattheim (DE)
(74) Vertreter: Fay, Hermann

(57) **Zusammenfassung**

Die Vorrichtung dient zur Verteilung von Flüssigkeiten und weist einen von einer Trageinrichtung gehalterten Sockel mit Sockelfluß und mindestens eine relativ zum Sockel drehbeweglich gelagerte erste Verteileinrichtung auf. Weiter ist eine zweite Verteileinrichtung (84) relativ zu einem starr mit der Trageinrichtung (41) verbundenen Grundelement (94) rotationsfähig gelagert. Die zweite Verteileinrichtung (84) ist mechanisch mit der ersten Verteileinrichtung (43) gekoppelt. Die zweite Verteileinrichtung (84) umgibt den Sockelfuß (44) mindestens bereichsweise im wesentlichen koaxial außenseitig.

## Beschreibung

Die Erfindung betrifft eine Vorrichtung zur Verteilung von Flüssigkeiten, die einen von einer Trageinrichtung gehalterten Sockel mit Sockelfuß und mindestens eine relativ zum Sockel drehbeweglich gelagerte erste Verteileinrichtung aufweist.

Derartige Vorrichtungen werden vielfältig eingesetzt, um eine koordinierte Zuleitung eines oder mehrerer Flüssigkeiten durchführen zu können. Beispielsweise ist es möglich, über derartige Verteiler eines oder mehrere Temperiermedien, beispielsweise Wasser oder Öl, zuzuführen.

Relativ häufig werden die eingesetzten Vorrichtungen zur Verteilung von Flüssigkeiten in ein sogenanntes Zweikreissystem integriert, bei dem Temperiermedien mit zwei unterschiedlichen Temperaturen zugeführt werden. Die Verteiler sind hierbei säulenartig konstruiert und die Zuführung sowie die Ableitung der Flüssigkeiten zu ortsfest im Bereich der Trageinrichtung angeordneten Anschlüssen erfolgt durch den Sockel der Verteilvorrichtung hindurch.

Bei derartigen Zweikreis-Systemen besteht die relativ zum Sockel drehbewegliche Verteileinrichtung aus einem rohrartigen Element, das gemeinsam mit dem Sockel eine geeignete Anzahl von Kammern für die zu verteilenden Flüssigkeiten begrenzt und das außenseitig mit einer erforderlichen Anzahl von Anschlüssen versehen ist. Ein typischer Aufbau erfolgt derart, daß ein Lager für die Verteileinrichtung im Bereich eines Sockelfußes angeordnet ist und daß in lotrechter Richtung oberhalb des Sockelfußes zunächst die Anschlüsse für den ersten Verteilerkreis und in lotrechter Richtung über diesen Anschlüssen die Anschlüsse über den zweiten Verteilerkreis positioniert sind.

Grundsätzlich kann eine derartige Vorrichtung durch in axialer Richtung aufeinanderfolgende Anordnung weiterer Verteileinrichtungen auf nahezu beliebig viele weitere separate Flüssigkeitskreise erweitert werden, es erfolgt hierdurch jedoch eine erhebliche Vergrößerung der Bauhöhe, darüber hinaus muß auch der Durchmesser der Vorrichtung vergrößert werden, um für die erforderliche Anzahl von Strömungskanälen ausreichende Strömungsquerschnitte bereitzustellen, die einen möglichst geringen Strömungswiderstand verursachen.

Aufgabe der vorliegenden Erfindung ist es daher, eine Vorrichtung der einleitend genannten Art derart zu konstruieren, daß eine erforderliche Anzahl von Flüssigkeitskreisen bei einem kompakten Aufbau bereitgestellt werden kann.

Diese Aufgabe wird erfindungsgemäß dadurch gelöst, daß eine zweite Verteileinrichtung relativ zu einem starr mit der Trageinrichtung verbundenen Grundelement rotationsfähig gelagert ist, daß die zweite Verteileinrichtung mechanisch mit der ersten Verteileinrichtung gekoppelt ist und daß die zweite Verteileinrichtung den Sockelfuß mindestens bereichsweise im wesentlichen koaxial außenseitig umgibt.

Durch die Anordnung der zweiten Verteileinrichtung außenseitig zum Sockelfuß ist es möglich, die ansonsten ungenutzte Bauhöhe des Sockelfußes für die Installation einer zusätzlichen Verteileinrichtung zu nutzen, mit deren Hilfe mindestens ein weiterer Flüssigkeitskreis bereitgestellt werden kann. Durch die mechanische Kopplung der zweiten Verteileinrichtung mit der ersten Verteileinrichtung wird eine exakt definierte Bewegungskopplung bereitgestellt und die koaxiale Anordnung unterstützt eine einfache mechanische Arbeitsweise sowie eine zuverlässige Abdichtung.

Durch die Anordnung mindestens des beweglichen Teiles der Verteileinrichtung außenseitig zum Sockelfuß ist es insbesondere möglich, den ansonsten ungenutzten Abstandsbereich zwischen der ersten Verteileinrichtung und der den Sockelfuß halternden Trageinrichtung konstruktiv für die Anordnung der zweiten Verteileinrichtung zu nutzen. Typischerweise ist in einem derartigen Bereich gemäß dem Stand der Technik ein relativ massiv ausgebildeter Verteilersockel angeordnet, der relativ zum Sockelfuß rotiert und dessen Funktion lediglich darin besteht, eine mechanische Basis für den rotierenden Teil der ersten Verteileinrichtung bereitzustellen. Im Hinblick auf die unmittelbare Verteilerfunktion sind in diesem Bereich jedoch keinerlei Anschlüsse verwendet. Gemäß der vorgeschlagenen Anordnung der zweiten Verteileinrichtung wird somit die funktionelle Kompaktheit der Vorrichtung wesentlich erhöht.

Zur Ermöglichung einer einfachen Leitungsführung ist vorgesehen, daß sich innerhalb des Grundelementes Verbindungskanäle für die zu verteilende Flüssigkeit in Richtung einer Verteilerlängsachse erstrecken.

Ebenfalls wird eine kompakte Konstruktion dadurch unterstützt, daß sich im Bereich der ersten Verteileinrichtung angeordnete Verbindungskanäle in Richtung der Verteilerlängsachse erstrecken.

Eine typische Anwendung wird dadurch definiert, daß die erste Verteileinrichtung zur Verteilung eines heißen Mediums ausgebildet ist.

Insbesondere ist daran gedacht, daß die erste Verteileinrichtung zur Verteilung eines heißen Mediums, beispielsweise von Öl oder Wasser, ausgebildet ist.

Eine optimale Strukturierung von Temperatur-Zonen bei der Verteilung von Flüssigkeiten mit unterschiedlichen Temperaturen wird dadurch erreicht, daß die zweite Verteileinrichtung zur Verteilung eines kalten Mediums ausgebildet ist.

Eine typische Anwendung wird dadurch definiert, daß die erste Verteileinrichtung als ein Zwei-Kreis-Verteiler ausgebildet ist.

Ein modulares System, das bedarfsabhängig bei im wesentlichen übereinstimmenden Baugruppen um einen zusätzlichen Verteilerkreis ergänzt werden kann, wird dadurch bereitgestellt, daß die erste Verteileinrichtung gemeinsam mit der zweiten Verteileinrichtung einen Drei-Kreis-Verteiler bereitstellt.

Eine sehr kompakte Konstruktion wird auch dadurch bereitgestellt, daß zwischen dem Sockelfuß und dem Grundelement ein Verteilersockel der ersten Verteileinrichtung angeordnet ist.

Zur Unterstützung einer preiswerten Herstellung durch geometrisch einfache Einzelteile trägt es bei, daß das Grundelement im Bereich seiner der Verteiler-Längsachse abgewandten Ausdehnung mit einem Kammerträger versehen ist.

Eine Lagerung und Abstützung der zweiten Verteileinrichtung kann beispielsweise dadurch erfolgen, daß der Kammerträger als Dichtflächenträger für Gleitringdichtungen der zweiten Verteileinrichtung ausgebildet ist.

In den Zeichnungen sind Ausführungsbeispiele der Erfindung schematisch dargestellt. Es zeigen:
- Fig. 1: einen Querschnitt durch die Vorrichtung vor eine Installation der zusätzlichen Verteileinrichtung außenseitig zum Sockelfuß,
- Fig. 2: eine schematische Darstellung eines Querschnittes durch eine außenseitig zum Sockelfuß angeordnete zusätzliche Verteileinrichtung sowie durch das hierzu korrespondierende Grundelement und
- Fig. 3: eine schematische Darstellung eines Querschnittes durch eine bereichsweise außenseitig zum Sockelfuß angeordnete zusätzliche Verteileinrichtung, bei der das korrespondierende Grundelement in den Sockelfuß integriert ist und die außenseitig einen im wesentlichen gleichen Durchmesser wie die erste Verteileinrichtung aufweist.

Eine Verwendung der Vorrichtung zur Verteilung von Flüssigkeiten kann beispielsweise zur Verteilung eines oder mehrerer Temperiermedien erfolgen.

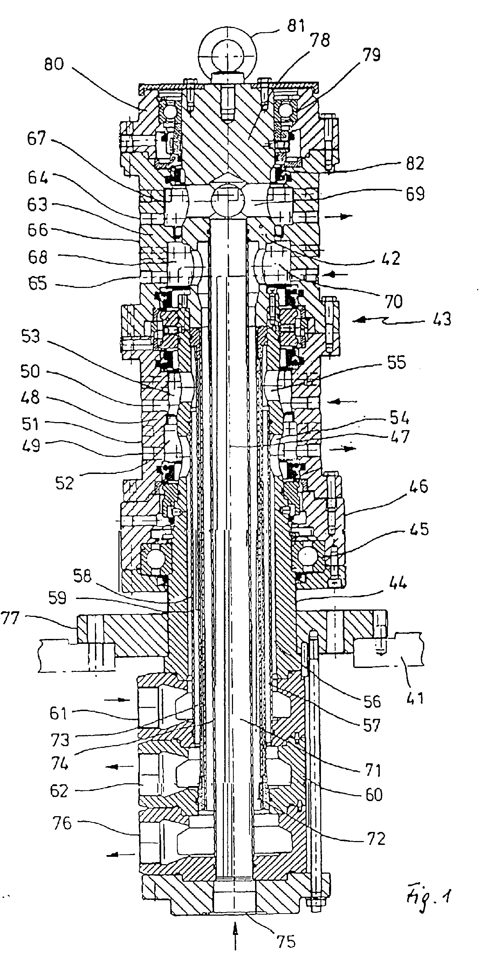

Fig. 1 zeigt einen Vertikalschnitt durch eine Vorrichtung zur Verteilung von Flüssigkeiten. Die Vorrichtung wird von einer Trageinrichtung (41) gehaltert, die als Teil eines Maschinengestelles ausgebildet sein kann. Mit der Trageinrichtung (41) ist starr ein Sockel (42) verbunden, der drehbeweglich eine erste Verteileinrichtung (43) haltert. Der Sockel (42) weist im Bereich seiner der Trageinrichtung (41) zugewandten Ausdehnung einen Sockelfuß (44) auf, der über ein Lager (45) einen Verteilersockel (46) der ersten Verteileinrichtung (43) führt.

Das Lager (45) kann als ein Kugellager ausgebildet sein, das koaxial zu einer Verteilerlängsachse (47) positioniert ist.

In Richtung der Verteilerlängsachse (47) schließt sich an den Verteilersockel (46) bei der Ausführungsform gemäß Fig. 1 ein Primärsegment (48) der ersten Verteileinrichtung (43) an, das eine Mehrzahl von Vorlaufanschlüssen (49) sowie Rücklaufanschlüssen (50) aufweist. Die Anschlüsse (49,50) erstrecken sich vorzugsweise relativ zur Verteilerlängsachse (47) in einer radialen Richtung und sind im Bereich eines Außenmantels (51) des Primärsegmentes (48) angeordnet.

Die Anschlüsse (49,50) münden jeweils in Verteilerringkammern (52,53) ein, die radial zu Sockelringkammern (54,55) angeordnet sind. Die Sockelringkammern (54,55) münden in Verbindungskanäle (56,57) des Sockels (42) ein, die beispielsweise durch rohrförmige Wandungen (58,59) und den Sockelfuß (44) begrenzt sein können. Die Verbindungskanäle (56,57) verlaufen durch eine von der Trageinrichtung (41) aufgespannte Ebene hindurch und münden im Bereich eines Anschlußblockes (60) des Sockels (42) in Versorgungsanschlüsse (61,62) ein, die beispielsweise über Schläuche oder Rohre mit einem Temperiergerät verbunden werden können.

Im Bereich seiner dem Verteilersockel (46) abgewandten Ausdehnung grenzt das Primärsegment (48) an ein Sekundärsegment (63), das einen zweiten Verteilerkreis für Flüssigkeiten bereitstellt und das eine Mehrzahl von Vorlaufanschlüssen (64) sowie Rücklaufanschlüssen (65) aufweist.

Die Anschlüsse (64,65) erstrecken sich vorzugsweise relativ zur Verteilerlängsachse (47) in einer radialen Richtung und sind im Bereich eines Außenmantels (66) des Sekundärsegmentes (63) angeordnet.

Die Anschlüsse (64,65) münden jeweils in Verteilerringkammern (67,68) ein, die radial zu Sockelringkammern (69,70) angeordnet sind. Die Sockelringkammern (69,70) münden in Verbindungskanäle (71,72) des Sockels (42) ein, die beispielsweise durch rohrförmige Wandungen (73,74) und den Sockelfuß (44) begrenzt sein können. Die Verbindungskanäle (71,72) verlaufen durch eine von der Trageinrichtung (41) aufgespannte Ebene hindurch und münden im Bereich eines Anschlußblockes (60) des Sockels (42) in Versorgungsanschlüsse (75,76) ein, die beispielsweise über Schläuche oder Rohre mit einem Temperiergerät verbunden werden können.

Eine Halterung des Sockelfußes (48) im Bereich der Trageinrichtung (41) kann beispielsweise über eine Grundplatte (77) erfolgen. Eine weitere Lagerung der ersten Verteileinrichtung (43) erfolgt außenseitig zu einem Sockelkopf (78), der dem Sockelfuß (44) gegenüber abgewandt angeordnet ist und der außenseitig ein Lager (79) trägt, das einen Verteilerkopf (80) rotationsfähig führt. Das Lager (79) kann als ein Kugellager ausgebildet sein. Zur Unterstützung einer Montage und einer Demontage des Verteilers ist im Bereich des Sokkelkopfes (78) eine Anschlagöse (81) angeordnet, in die beispielsweise eine Hubeinrichtung oder ein Hallenkran eingreifen kann.

Zur Gewährleistung einer ausreichenden Abdichtung werden zwischen der ersten Verteileinrichtung (43) und dem Sockel (42) Dichtungen (82) angeordnet, die typischerweise als Ringdichtungen realisiert und konzentrisch zur Verteilerlängsachse (47) angeordnet sind.

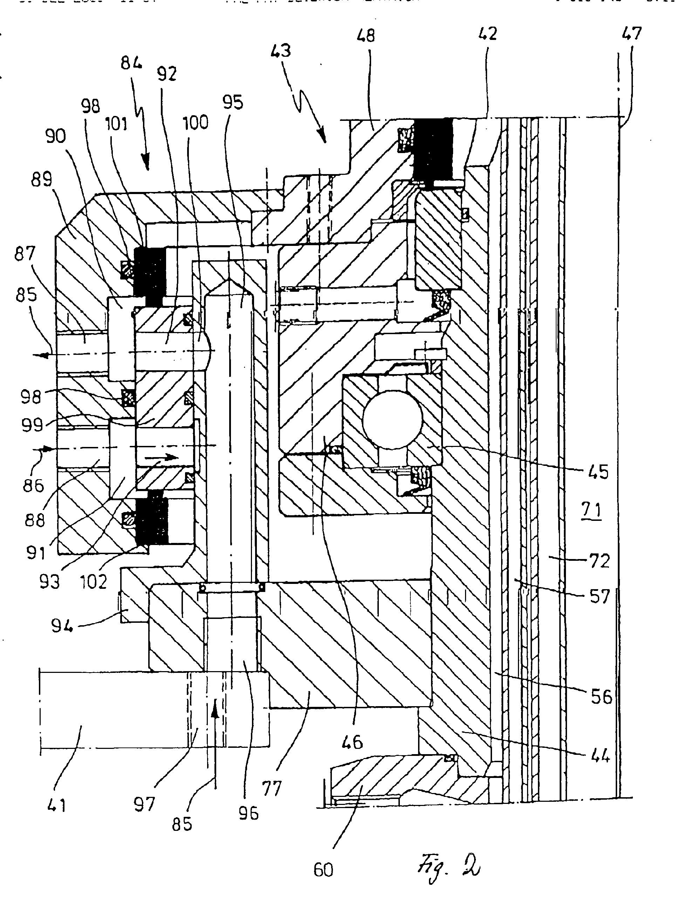

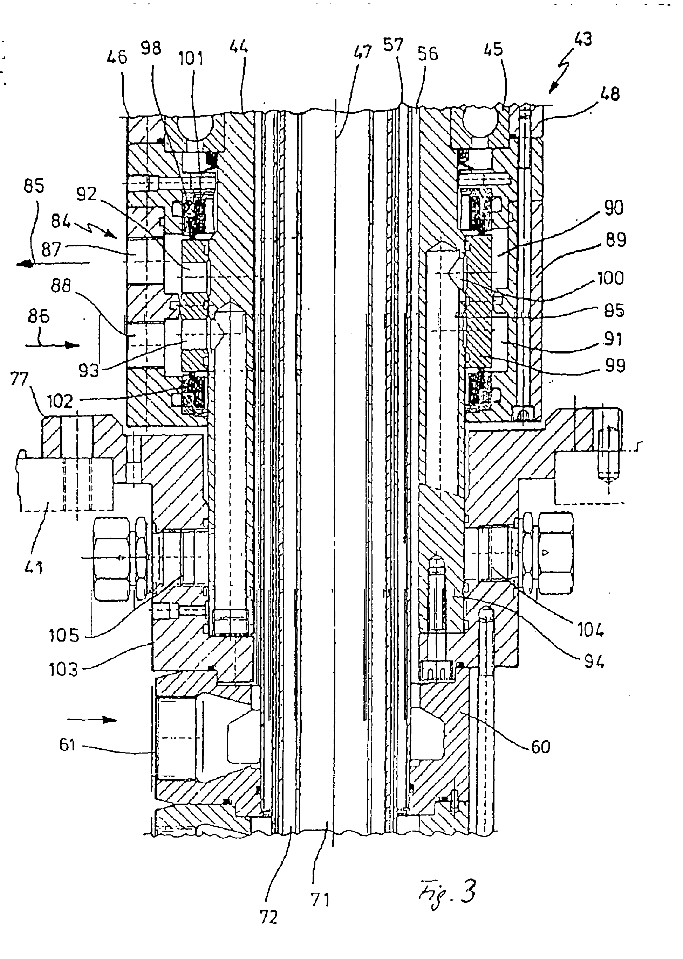

Fig. 2 zeigt eine teilweise geschnittene Seitenansicht einer Vorrichtung, die ähnlich wie die Vorrichtung in Fig. 1 konstruiert ist. In Fig. 2 ist zusätzlich zu den Segmenten (48,63) der ersten Verteileinrichtung (43) ein Installationsbereich (83) für eine in Fig. 3 dargestellte zweite Verteileinrichtung (84) eingezeichnet. Der Installationsbereich (83) umgibt mindestens zu einem Teil außenseitig den Verteilersockel(46) sowie den Sockelfuß (44).

Zur besseren Veranschaulichung der Einbausituation sind im Bereich der Versorgungsanschlüsse (61,62,75,76) Anschlußflansche für Versorgungsleitungen eingezeichnet. Ebenfalls sind im Bereich der Anschlüsse (49,50,64,65) der ersten Verteileinrichtung (43) Anschlußflansche sowie Verbindungsleitungen eingezeichnet. Durch die Strömungspfeile (85) wird in Fig. 2 veranschaulicht, wie eine Zuführung und eine Ableitung des zu verteilenden Mediums in den Installationsbereich (83) erfolgen kann. Die entsprechenden Anschlußleitungen werden vorzugsweise wieder bei der dargestellten räumlichen Orientierung unterhalb der Grundplatte (77) und somit auf einem Höhenniveau des Anschlußblockes (60) durchgeführt. Durch die Strömungspfeile (86) wird die Abgabe und die Rückführung des zu verteilenden Mediums im Bereich der den zu temperierenden Elementen zugewandten Anschlüssen veranschaulicht.

Fig. 2 zeigt in einer schematischen Querschnittdarstellung die Anordnung der zweiten Verteileinrichtung (84) für ein erstes Ausführungsbeispiel. Es ist zu erkennen, daß die zweite Verteileinrichtung (84) mechanisch mit der ersten Verteileinrichtung (43) verbunden ist. Hierdurch ist sichergestellt, daß bei einer Rotation der ersten Verteileinrichtung (43) relativ zum Sockel (42) eine gleichartige Rotation der zweiten Verteileinrichtung (84) erfolgt. Durch die mechanische Kopplung der ersten Verteileinrichtung (43) und der zweiten Verteileinrichtung (84) werden separate Lager für die zweite Verteileinrichtung (84) vermieden. Dies trägt zu einer kostengünstigen Realisierung bei.

Die zweite Verteileinrichtung (84) weist Vorlaufanschlüsse (85) und Rücklaufanschlüsse (86) auf, um die Verteilung eines flüssigen Mediums für einen weiteren Flüssigkeitskreis zu unterstützen. Die Anschlüsse (87,88) sind im Bereich eines Außenmantels (89) der zweiten Verteileinrichtung (84) angeordnet. Die Anschlüsse (87,88) münden in Verteilerringkammern (90,91) ein, zu denen korrespondierend und bezüglich der Verteilerlängsachse (47) in radialer Richtung innenseitig Statorkammern (92,93) eines Grundelementes (94) angeordnet sind. Das Grundelement (94) ist mechanisch starr mit der Trageinrichtung (41) verbunden. Bei der dargestellten Ausführungsform erfolgt dies über die Grundplatte (77). Innerhalb des Grundelementes (94) erstrecken sich Verbindungskanäle (95), um eine Zuführung und Ableitung des zu verteilenden Mediums zu ermöglichen. Als Verlängerung der Verbindungskanäle (95) sind im Bereich der Grundplatte (77) beziehungsweise der Trageinrichtung (41) Durchgangsausnehmungen (96,97) angeordnet. Über Dichtungen (98,101,102) erfolgt eine Abdichtung der zweiten Verteileinrichtung (84) relativ zum Grundelement (94) sowohl in radialer als auch in axialer Richtung. Ebenfalls sind die Verteilerkammern (90,91) relativ zueinander abgedichtet.

Bei der in Fig. 2 dargestellten Ausführungsform ist das Grundelement (94) zur Vereinfachung der Fertigung zweiteilig ausgebildet und weist im Bereich seiner den Verteilerkammern (90,91) zugewandten Ausdehnung einen ringförmigen Kammerträger (99) auf, der zentrisch relativ zur Verteilerlängsachse (57) angeordnet ist und in dessen Bereich die Statorkammern (92,93) angeordnet sind. Die Statorkammern (92,93) sind über Durchgangsausnehmungen (100) mit jeweils zu geordneten Verbindungskanälen (95) innerhalb des Grundelementes (94) verbunden. Die Verbindungskanäle (95) können sich dabei im wesentlichen mit einer Orientierung wie die Verteilerlängsachse (47) erstrecken, die Durchgangsausnehmungen (100) weisen hingegen eine im wesentlichen radiale Orientierung auf. Diese ermöglicht es, die Verbindungskänäle (95) sowie die Durchgangsausnehmungen (100) als Bohrungen zu realisieren. Bei einer ringförmigen Konstruktion der Verteilerringkammern (90,91) ist es ebenfalls möglich, die Statorkammern (92,93) als Bohrungen zu realisieren.

Eine Abdichtung des Außenmantels (89) der zweiten Verteileinrichtung (84) relativ zum Grundelement (94) kann über Gleitringe (101,102) erfolgen, die abgedichtet oberhalb und unterhalb des Kammerträgers (99) angeordnet sind. Grundsätzlich ist es aber ebenfalls denkbar, eine entsprechende Lagerung und Abdichtung der zweiten Verteileinrichtung (84) relativ zum Grundelement (94) in radialer Richtung außenseitig am Grundelement (94) vorzunehmen.

Fig. 3 zeigt ein zweites Ausführungsbeispiel. Bei dieser Ausführungsform ist das Grundelement (94) in den Sockelfuß (44) integriert und wird im wesentlichen dadurch bereitgestellt, daß in den Sockelfuß (44) die erforderlichen Verbindungskanäle (95) eingebracht werden. Darüber hinaus ist gegenüber der Ausführungsform in Fig. 3 das Lager (45) in Richtung der Verteilerlängsachse (47) mit einem größeren Abstand zur Grundplatte (77) angeordnet. Dies ermöglicht es, die zweite Verteileinrichtung (84) derart in dem Freiraum zwischen dem Verteilersockel (46) und der Grundplatte (77) anzuordnen, daß ein Außendurchmesser der zweiten Verteileinrichtung (84) im wesentlichen gleich einem Außendurchmesser der ersten Verteileinrichtung (43) dimensioniert ist. Hierdurch kann die Kompaktheit der Vorrichtung nochmals vergrößert werden.

Aufgrund der Integration des Grundelementes (94) in den Sockelfuß (44) ist die Grundplatte (77) in Richtung ihrer der zweiten Verteileinrichtung (84) abgewandten Ausdehnung mit einem Anschlußflansch (103) versehen, der

## Patentansprüche

1. Vorrichtung zur Verteilung von Flüssigkeiten, die einen von einer Trageinrichtung gehalterten Sockel mit Sockelfluß und mindestens eine relativ zum Sockel drehbeweglich gelagerte erste Verteileinrichtung aufweist, **dadurch gekennzeichnet, daß** eine zweite Verteileinrichtung (84) relativ zu einem starr mit der Trageinrichtung (41) verbundenen Grundelement (94) rotationsfähig gelagert ist, daß die zweite Verteileinrichtung (84) mechanisch mit der ersten Verteileinrichtung (43) gekoppelt ist und daß die zweite Verteileinrichtung (84) den Sockelfuß (44) mindestens bereichsweise im wesentlichen koaxial außenseitig umgibt.

2. Vorrichtung nach Anspruch 1, **dadurch gekennzeichnet, daß** sich innerhalb des Grundelementes (94) Verbindungskanäle (95) für die zu verteilende Flüssigkeit in Richtung einer Verteilerlängsachse (47) erstrecken.

3. Vorrichtung nach Anspruch 1 oder 2, **dadurch gekennzeichnet, daß** sich im Bereich der ersten Verteileinrichtung (43) angeordnete Verbindungskanäle (56,57,71,72) in Richtung der Verteilerlängsachse (47) erstrecken.

4. Vorrichtung nach einem der Ansprüche 1 bis 3, **dadurch gekennzeichnet, daß** die erste Verteileinrichtung (43) zur Verteilung eines heißen Mediums ausgebildet ist.

5. Vorrichtung nach einem der Ansprüche 1 bis 3, **dadurch gekennzeichnet, daß** die erste Verteileinrichtung (43) zur Verteilung eines heißen Öles ausgebildet ist.

6. Vorrichtung nach einem der Ansprüche 1 bis 5, **dadurch gekennzeichnet, daß** die zweite Verteileinrichtung (84) zur Verteilung eines kalten Mediums ausgebildet ist.

7. Vorrichtung nach einem der Ansprüche 1 bis 6, **dadurch gekennzeichnet, daß** die erste Verteileinrichtung (43) als ein Zwei-Kreis-Verteiler ausgebildet ist.

8. Vorrichtung nach einem der Ansprüche 1 bis 7, **dadurch gekennzeichnet, daß** die erste Verteileinrichtung (43) gemeinsam mit der zweiten Verteileinrichtung (84) einen Drei-Kreis-Verteiler bereitstellt.

9. Vorrichtung nach einem der Ansprüche 1 bis 8, **dadurch gekennzeichnet, daß** zwischen dem Sokkelfuß (44) und dem Grundelement (94) ein Verteilersockel (46) der ersten Verteileinrichtung (43) angeordnet ist.

10. Vorrichtung nach einem der Ansprüche 1 bis 9, **dadurch gekennzeichnet, daß** das Grundelement (94) im Bereich seiner der Verteilerlängsachse (47) abgewandten Ausdehnung mit einem Kammerträger (99) versehen ist.

11. Vorrichtung nach einem der Ansprüche 1 bis 10, **dadurch gekennzeichnet, daß** der Kammerträger (99) als Dichtflächenträger für Gleitringdichtungen (101,102) der zweiten Verteileinrichtung (84) ausgebildet ist.
